# EUROPÄISCHE PATENTSCHRIFT

(11) **EP 1 030 066 B1**
(45) Veröffentlichungstag und Bekanntmachung des Hinweises auf die Patenterteilung: **25.06.2003**
(21) Anmeldenummer: 00810081.0
(22) Anmeldetag: 28.01.2000
(51) Int. Cl.: F16B 7/04

(54) **Lösbare Klemmverbindung für eine Verstrebung**
Releasable clamped connection for a strut
Assemblage serré détachable pour une contre-fiche

(30) Priorität: 18.02.1999 EP 99810149
(43) Veröffentlichungstag der Anmeldung: 23.08.2000
(73) Patentinhaber: Visplay International AG, 4132 Muttenz (CH)
(72) Erfinder: Walter, Herbert, 79379 Müllheim (DE); Kury, Werner, 79379 Müllheim (DE)
(74) Vertreter: Ullrich, Gerhard, Dr.

(56) Entgegenhaltungen:
- AU-B- 421 622
- BE-A- 758 052
- GB-A- 2 147 680

## Beschreibung

### Anwendungsgebiet der Erfindung

Die Erfindung bezieht sich auf eine lösbare Klemmverbindung für eine Verstrebung aus Rohr von unrundem, vorzugsweise von quadratischem Querschnitt, und umfasst ein Verbindungselement verschiedener Konfiguration sowie ein dazu komplementär dimensioniertes Rohr. Mit einer Vielzahl der betreffenden Verbindungselemente und Rohrstücken lassen sich Verstrebungen innerhalb einer Stangenkonstruktion, eines Rahmenaufbaus oder eines dreidimensionalen Gestells aufbauen. Die Klemmverbindung kann demnach, z.B. vielfältig im Möbelbau oder für Präsentationsgestelle in Gestalt von Regalen, Vitrinen, Schränken, Tischen und Podesten, wie sie besonders auf Messen und in Geschäften eingesetzt werden, Anwendung finden. Eine weitere Anwendung sind Ausstattungssysteme zur Raumgestaltung, wie Abschirmwände, Dekorationsflächen oder Halterungen für Artikel des beruflichen oder privaten Gebrauchs.

Bei Möbeln oder Rahmen wird zumeist eine längere Standzeit verlangt, Gestelle hingegen werden häufig für nur kurze Zeitspannen benötigt, müssen sich also rasch auf- und wieder abbauen lassen. Dennoch ist, unabhängig von der zu erstellenden Konstruktion, grundsätzlich deren solider Zusammenhalt erforderlich. So kann sich im Umfeld von Gestellen reger Publikumsverkehr abspielen und bei der Präsentation von Waren, wie z.B. Porzellan, besitzen die Waren einen erheblichem Wert. Besonders für Laden- und Messestandseinrichtungen ist heutzutage eine grosse Variabilität, ästhetische Gestaltung aber auch kostengünstige Lösung bei Präsentationsgestellen wünschenswert. Im demontierten Zustand, während des Transports und der Lagerung, sollen die Teile möglichst wenig Platz beanspruchen, was für alle Anwendungsbereiche gilt.

### Stand der Technik

Eine Klemmverbindung dieses Typs mit einem Verbindungselement und im Querschnitt quadratischen Rohrstücken wird in der CH-A-454 555 offenbart.

Das Verbindungselement besitzt Zapfen, die äusserlich vier jeweils um 90° versetzte längslaufende Abflachungen aufweisen. In der Montagestellung, d.h. die vier Abflachungen sind den vier Wandungen des Rohrstücks zugewandt, lässt sich der Zapfen des Verbindungselements in das Rohrstück einschieben, da die Bereiche des maximalen Querschnitts des Zapfens auf den Diagonalen des Rohrquerschnitts zu liegen kommen. Werden nun das Verbindungselement und das Rohrstück relativ zueinander um 45° verdreht, so quetschen sich die zwei Bereiche des maximalen Querschnitts des Zapfens jeweils zwischen zwei parallel zueinander erstreckende Wandungen und die Abflachungen liegen jetzt auf den Diagonalen des Rohrquerschnitts. Hierdurch ergibt sich in der Klemmstellung ein intensiver Reibschluss zwischen dem in das Rohrstück eingesteckten Zapfen und den Innenseiten der Wandungen des Rohrstücks. Weder lässt sich das Rohrstück vom Zapfen abziehen, noch leicht wieder in die Montagestellung zurückdrehen.

Auf den Zapfen des Verbindungselements ist mittig ein Rohrabschnitt in der Klemmstellung aufgesetzt und mit dem Zapfen verstiftet oder verschraubt. Der Rohrabschnitt hat die gleiche Beschaffenheit und Dimension wie die auf die beiden Zapfenden aufzuschiebenden Rohrstücke, welche im montierten Zustand nahezu fugenlos am Rohrabschnitt anliegen. Die Anbringung des Rohrabschnitts am Verbindungselement sowie die den Reibschluss bildenden Konturen sind unvollkommen. Das Verdrehen von der Montagestellung in die Klemmstellung verlangt erhebliche Kraft, die an sich nicht der Intensität des damit erreichten Reibschlusses entspricht. Ferner ist es umständlich und erfordert zusätzliche Teile sowie Arbeitsgänge, den Rohrabschnitt auf dem Zapfen zu montieren. Ausserdem ist die eingebrachte Schraube bzw. der Stift von aussen sichtbar und muss - um nicht zu augenfällig zu sein -, sehr exakt eingesetzt sein.

Eine weiter entwickelte Klemmverbindung der vorbeschriebenen Art ist in der Firmenschrift "Converta - vitrashop", Druckvermerk 11.92, der Vitrashop AG, Birsfelden / CH, gezeigt. Anstelle eines auf dem Zapfen fixierten Rohrabschnitts sind die Verbindungselemente hier einstückig ausgebildet mit einem Mittelstück, von dem sich die Zapfen erstrecken. Je nach Konfiguration des Verbindungselements - z.B. als Verlängerung, Winkel, T-Stück oder Kreuz - bestimmt sich die Anzahl und die Erstreckungsrichtung der Zapfen. Damit hat man die Verbindungselemente unkomplizierter und die Montage effizienter gestaltet und die Ästhetik störende Stifte oder Verschraubungen vermieden. Es verblieb aber das Problem, dass eine ausreichende Festigkeit der Klemmverbindungen nur mit grösserem Kraftaufwand bei der Montage und grösserer Materialstärke der Rohrstücke erreichbar war.

### Aufgabe der Erfindung

Angesichts der fortbestehenden Unvollkommenheit bei lösbaren Klemmverbindungen der hiesigen Gattung liegt der Erfindung die Aufgabe zugrunde, die Festigkeit bei einer hergestellten Klemmverbindung zu erhöhen und den Reibschluss zu intensivieren, jedoch den nötigen Kraftaufwand beim Verdrehen von der Montage- in die Klemmstellung bzw. gegensinnig möglichst zu senken. Die intensive Klemmverbindung soll ferner bei einer möglichst geringen Materialstärke der Rohrstücke erreichbar sein, welche für die Statik eines aufgebauten Präsentationsgestells ausreichende Sicherheit gewährleistet. Dies bedeutet aber auch, dass die Klemmverbindung bei grösseren zu überbrückenden Spannweiten mit entsprechend langen Rohrstücken und adäquat grösserer Materialstärke unvermindert funktionstüchtig sein muss. Den äusseren Gesamteindruck störende Massnahmen durch Stifte, Schrauben, Keile u.ä. sind zu vermeiden. Alle Konfigurationen der Verbindungselemente, welche für den Aufbau von komplexen, vielfach variierbaren Verstrebungen nötig sind, müssen sich in Serie zu effizienten Kosten rationell herstellen lassen.

### Übersicht über die Erfindung

Die lösbare Klemmverbindung ist für eine Verstrebung aus Verbindungselementen und Rohrstücken konzipiert, die vorzugsweise einen quadratischen Querschnitt aufweisen. Ein Verbindungselement weist ein zentrisch angeordnetes Knotenteil auf, von dessen Stirnseiten sich zumindest ein Zapfen erstreckt. Am Zapfen sind zwei, vorzugsweise vier axial verlaufende und zueinander systematisch versetzte Abflachungen vorhanden, zwischen denen sich zwei, vorzugsweise vier axial verlaufende und zueinander systematisch versetzte Klemmzonen befinden. Das Rohrstück hat bei quadratischem Querschnitt je vier Wandungen und längslaufende Rohrkanten, und endet beidseits mit einer Schnittfläche. In der *Montagestellung -* dies ist eine relative Drehstellung zwischen Zapfen und Rohrstück - lässt sich der Zapfen mit den über die Abflachungen verschmälerten Durchmessern des Zapfens in das Rohrstück einschieben. Hierbei nehmen die Abflachungen zur jeweils benachbarten Wandung einen Montagespalt ein und die über die Klemmzonen unverminderten Durchmesser des Zapfens kommen diagonal im Querschnitt des Rohrstücks zu liegen.

In der um 45° gedrehten *Klemmstellung* geraten die Klemmzonen mit der jeweils benachbarten Wandung in Reibschluss und verformen hierbei die Wandungen konvex nach aussen elastisch. Die Abflachungen kommen diagonal im Querschnitt des Rohrstücks zu liegen. Erfindungsgemäss werden die Klemmzonen von Querrippen gebildet, die zwischen den Zapfen umlaufenden Radialnuten liegen, einen oberen Gipfel aufweisen und nach beiden Seiten zu den benachbarten Abflachungen hin abfallen. Beim Drehen in die *Klemmstellung* laufen die Querrippen sukzessive an der jeweils benachbarten Wandung bis zu den Gipfeln auf.

Die nachfolgenden Merkmale beziehen sich auf spezielle Ausführungen der Erfindung. Die Stirnseiten des Knotenteils besitzen den gleichen Querschnitt wie das auf den Zapfen aufzuschiebende Rohrstück. Die Schnittfläche des Rohrstücks lässt sich im Prinzip fugenlos bis an die Stirnseite aufschieben und in der *Klemmstellung* fluchten die Rohrkanten mit den Knotenkanten. Am Knotenteil kann man eine Innengewindebohrung zur Befestigung eines Fussoder Abstützelements vorsehen.

An einem dritten oder weiteren Zapfen, der sich von einem Verbindungselement in Relation zu den übrigen Zapfen in eine andere Ebene erstreckt, können zur erleichterten Entformbarkeit bei Druckguss die Klemmzonen nur aus zwischen den Abflachungen liegenden Längsrippen bestehen, welche zuoberst einen Kamm aufweisen. Die Oberflächen des Knotenteils sind in jeweils axialer Erstreckung, fluchtend zu den abgehenden Zapfen, mit einem vom blossen Auge wahrnehmbaren Richtungsschliff bearbeitet, um einen besonderen optischen Effekt zu erzielen. Vom Knotenteil können bis zu sechs Zapfen abgehen.

Mit zumindest einem Verbindungselement, das zumindest zwei Zapfen aufweist, und zumindest zwei Rohrstücken, lässt sich eine Stangenkonstruktion oder ein Rahmen erstellen. Mit einer Vielzahl von Verbindungselementen und Rohrstücken lässt sich ein Gestell errichten, welches zum Aufstellen auf dem Boden oder zum Anhängen konzipiert sein kann. Bestimmte Rohrstücke weisen ein Lochraster auf, in das Halter für Tragstangen oder Tablare oder in das die Spanner von Querverspannungen einhängbar sind, die sich zu anderen Rohrstücken innerhalb des Gestells erstrecken und zu dessen Stabilität beitragen. Das Gestell kann dem Aufbau eines Möbels oder eines Gebildes zur Warenpräsentation dienen.

Die Klemmverbindung ist ferner für ein Ausstattungssystem zur Raumgestaltung, z.B. für die Errichtung von Abschirmwänden oder Dekorationsflächen einsetzbar. Schliesslich kann die Klemmverbindung auch als Halterung für Artikel des beruflichen oder privaten Gebrauchs verwendet werden.

Ein besonders erwähnenswerter Vorteil der erfindungsgemässen Klemmverbindung liegt darin, dass nun auch stabileres Rohr mit dickerer Wandstärke für den Aufbau sich weiter erstreckender Stangenkonstruktionen, Rahmenaufbauten oder Gestelle grösserer Spannweite verwendet werden können. Dennoch lässt sich die Klemmverbindung mit einem intensiven Reibschluss und hoher Auszugsfestigkeit unter relativ geringem Krafteinsatz herstellen. Hierdurch ergeben sich sowohl für den für den Möbel-, Laden- und Messestandsbau als auch für Ausstattungssyteme attraktive Konstruktions- und Gestaltungsmöglichkeiten.

### Kurzbeschreibung der beigefügten Zeichnungen

- Figur 1A:: ein erfindungsgemässes Verbindungselement in der Gestalt als Winkelstück mit zwei Zapfen;
- Figur 1B:: ein an sich herkömmliches Rohrstück zum Aufbau einer Klemmverbindung;
- Figur 1C:: ein Verbindungselement Winkelstück mit drei Zapfen mit zwei in der Klemmstellung angesetzten Rohrstücken und einem an den dritten Zapfen angenäherten Rohrstück;
- Figur 1D:: die Darstellung gemäss Figur 1C mit an den dritten Zapfen in der Montagestellung angesetztem Rohrstück;
- Figur 1E:: die Darstellung gemäss Figur 1D mit auch am dritten Zapfen in der Klemmstellung angesetztem Rohrstück;

- Figur 2A:: das Funktionsprinzip der Klemmverbindung in der *Montagestellung;*
- Figur 2B:: das Funktionsprinzip der Klemmverbindung in der *Klemmstellung*, theoretischer Zustand;
- Figur 2C:: das Funktionsprinzip der Klemmverbindung in der *Klemmstellung*, realer Zustand;

- Figuren 3A bis 3G:: Verbindungselemente verschiedener Konfiguration;

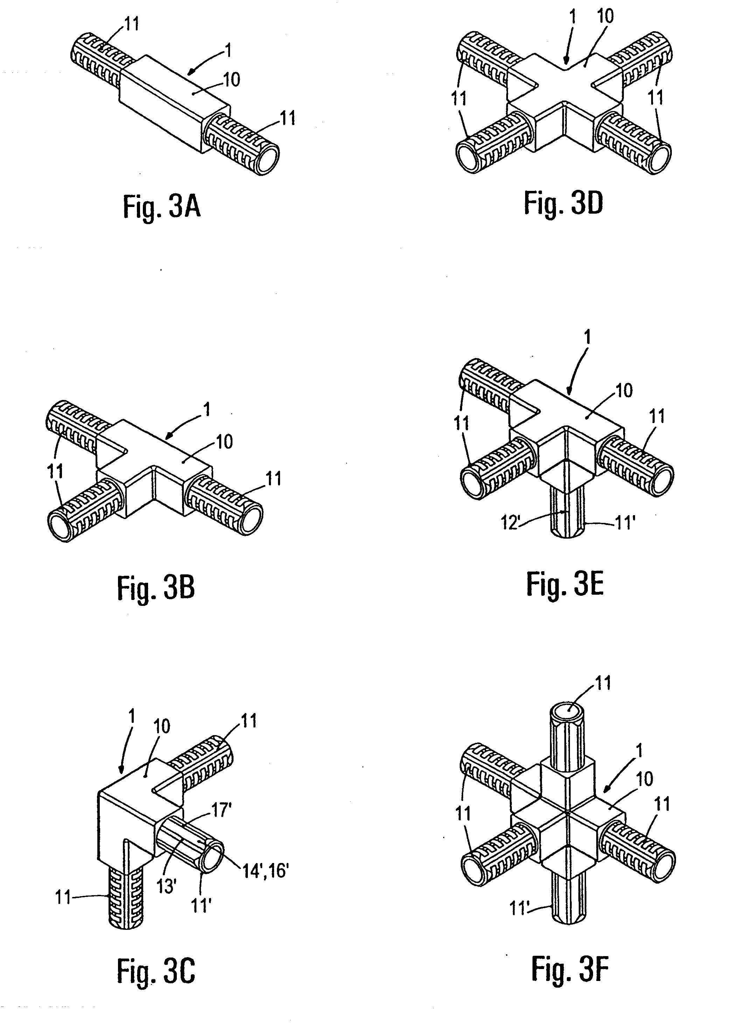

- Figur 3A:: ein Verlängerungsstück mit zwei Zapfen;
- Figur 3B:: ein T-Stück mit drei Zapfen;

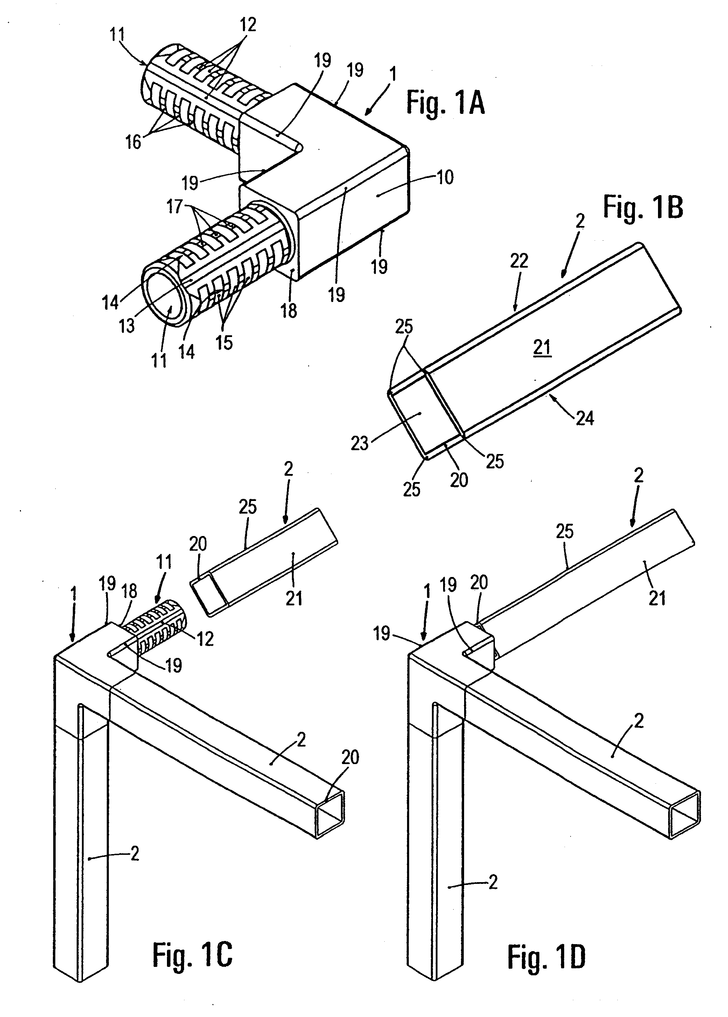

- Figur 3C:: das Winkelstück mit drei Zapfen aus Figur 1C;
- Figur 3D:: ein Kreuzstück mit vier Zapfen;
- Figur 3E:: ein Winkelstück mit vier Zapfen;
- Figur 3F:: das Kreuzstück gemäss Figur 3D mit einem abgehenden fünften Zapfen;

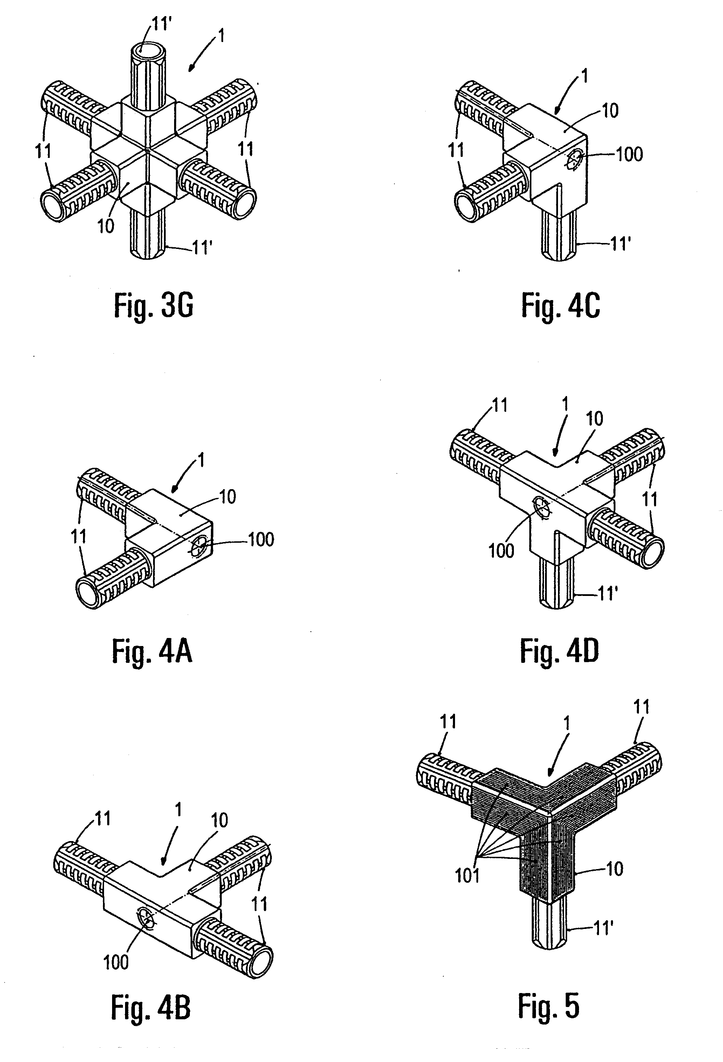

- Figur 3G:: das Kreuzstück gemäss Figur 3D mit diametral abgehendem fünften und sechsten Zapfen;

- Figuren 4A bis 4D:: Verbindungselemente verschiedener Konfiguration mit einer Innengewindebohrung im Knotenteil;
- Figur 4A:: das Winkelstück gemäss Figur 1A;
- Figur 4B:: das T-Stück gemäss Figur 3B;
- Figur 4C:: das Winkelstück gemäss Figur 3C;
- Figur 4D:: das Winkelstück gemäss Figur 3E;

- Figur 5:: das Winkelstück gemäss Figur 3C mit Richtungsschliff;

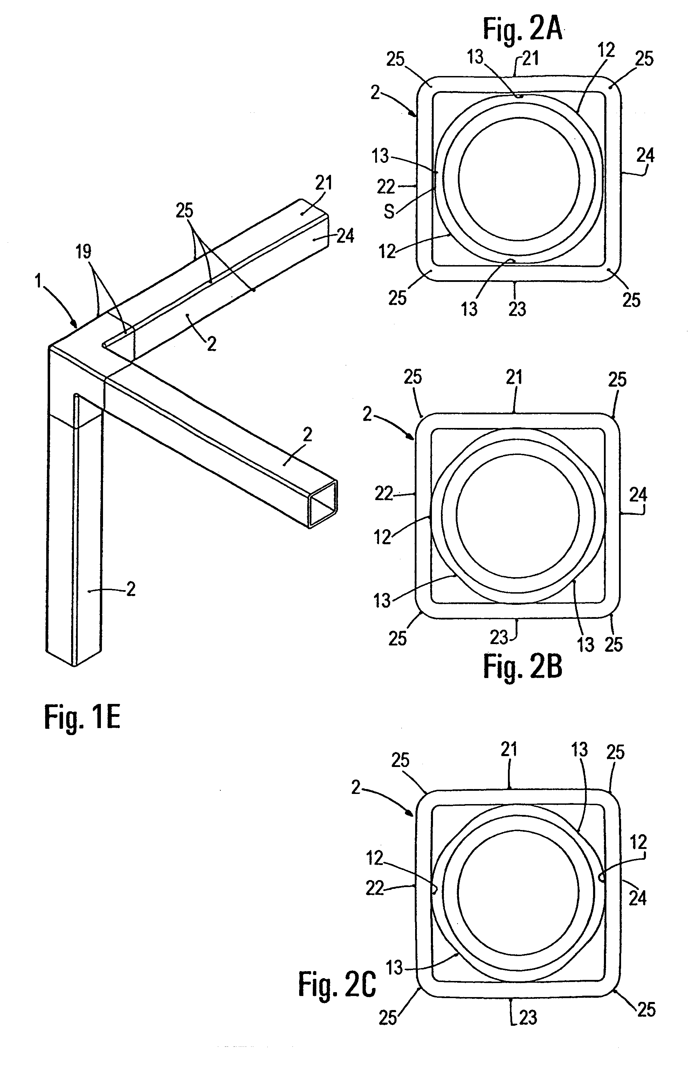

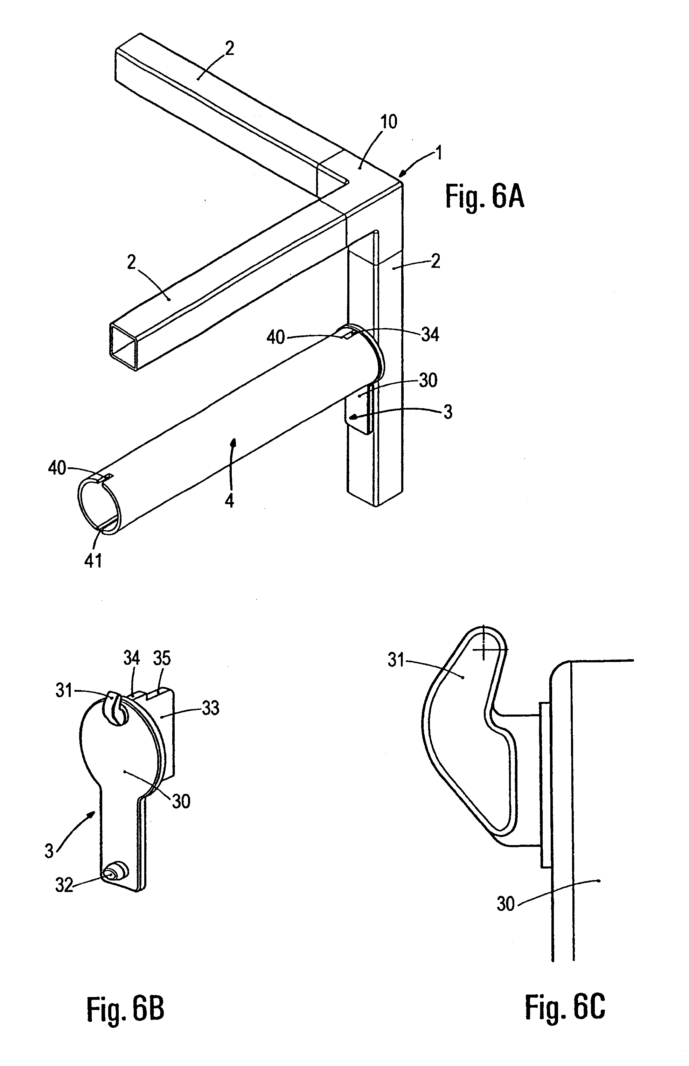

- Figur 6A:: die Darstellung gemäss Figur 1E mit auf einem eingehängten Halter ruhender Tragstange;
- Figur 6B:: den Halter aus Figur 6A;
- Figur 6C:: die Einhängenase des Halters aus Figur 6B in der Vergrösserung;

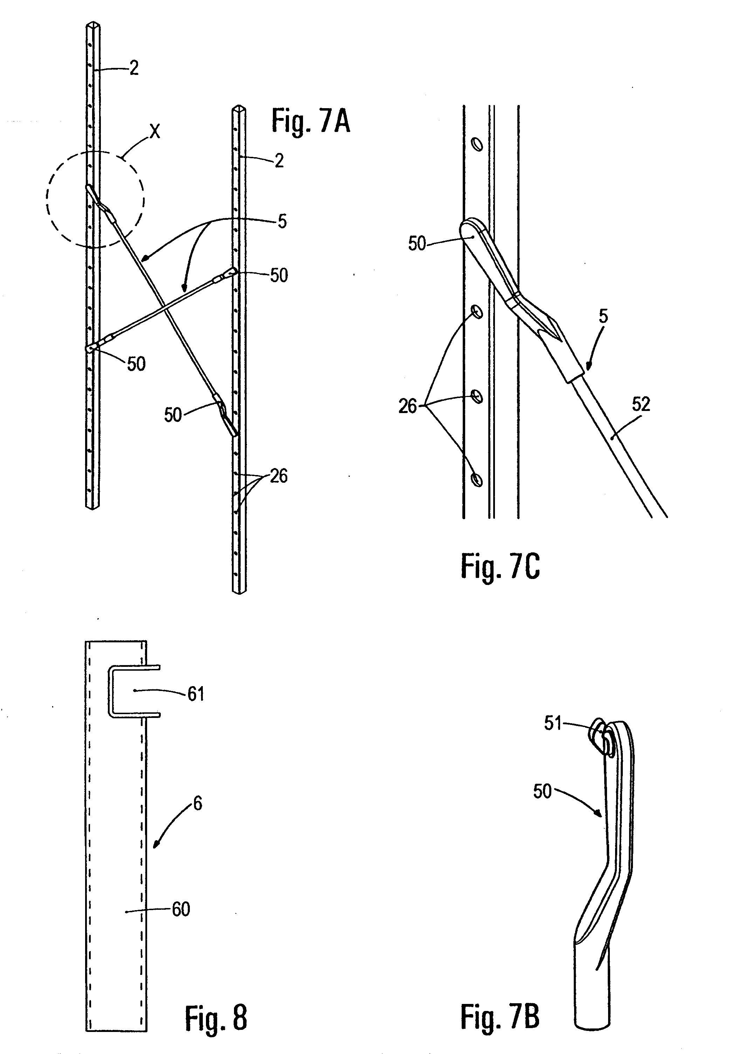

- Figur 7A:: eine kreuzweise Verspannung an zwei Vertikalrohren;
- Figur 7B:: den Spanner aus Figur 7A;
- Figur 7C:: das Detail X aus Figur 7A;

- Figur 8:: einen Montageschlüssel;

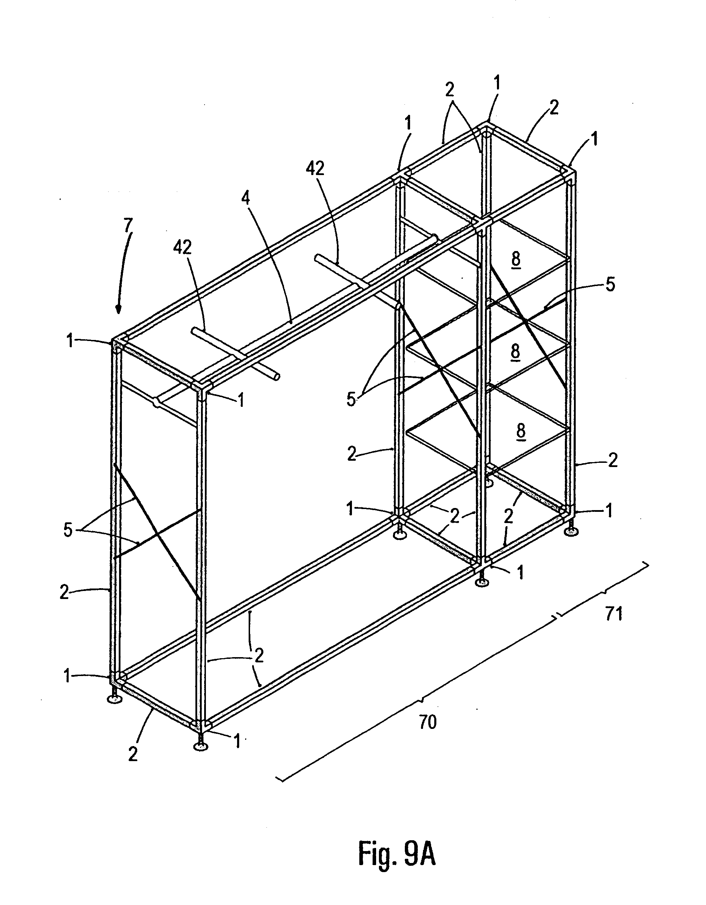

- Figur 9A:: ein am Boden stehendes Gestell mit zwei Zellen;

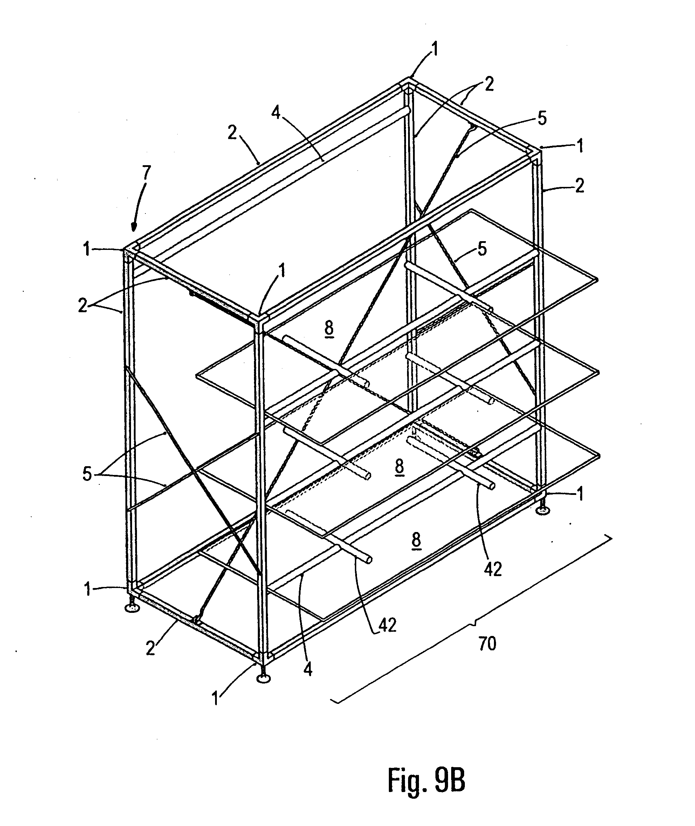

- Figur 9B:: ein am Boden stehendes Gestell mit einer Zelle; und

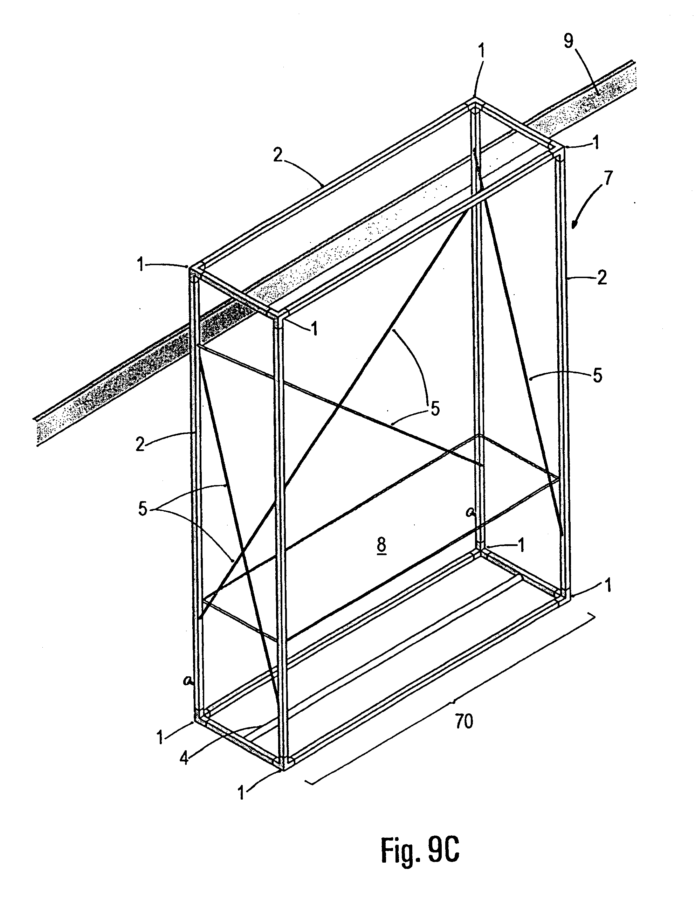

- Figur 9C:: ein an einer Wandschiene aufgehängtes Gestell mit einer Zelle.

### Ausführungsbeispiele

Nachstehend erfolgt die detaillierte Beschreibung von Ausführungsbeispielen zur erfindungsgemässen Klemmverbindung, zu den verwendeten Bauteilen und zu mittels der Klemmverbindungen errichteten Gestellen. Die bei der nachstehenden Beschreibung beispielhaft vorgenommene Darstellung anhand eines aufgebauten Gestells bedeutet jedoch keinerlei restriktive Auslegung für den breiten Anwendungsbereich der Erfindung gemäss dem Kapitel "Übersicht über die Erfindung" und den Patentansprüchen. Arn Ende der Beschreibung werden wesentliche mögliche Modifikationen erwähnt.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder nachfolgenden Figurenbeschreibungen Bezug genommen. Im Interesse der Übersichtlichkeit wird auf die wiederholte Bezeichnung von Bauteilen in weiteren Figuren zumeist verzichtet, sofern zeichnerisch eindeutig erkennbar ist, dass es sich um "wiederkehrende" Bauteile handelt.

### Figuren 1A und 1B

Das Verbindungselement **1** in seiner hier gezeigten Konfiguration als Winkelstück weist das rechtwinklige Knotenteil **10** auf, von dem sich in Fortsetzung des rechten Winkels von den Stirnseiten **18** zwei identische Zapfen **11** in einer Ebene liegend erstrecken. Die Stirnseiten **18** des Knoten-teils **10** haben einen quadratischen Querschnitt, während die Zapfen **11** zylindrisch und innen vorzugsweise hohl sind, was Material und Gewicht erspart. Die Zapfen **11** treten zentrisch aus den Stirnseiten **18** aus, wobei der Durchmesser der Zapfen **11** kleiner als der Aussendurchmesser des anzusetzenden Rohrstücks **2** ist.

Äusserlich sind die Zapfen **11** mit einem speziellen Profil **12** zur Erzeugung eines maximalen Reibschlusses für die Klemmverbindung versehen. Dieses Profil **12** wird gebildet aus vier axial verlaufenden, jeweils um 90° versetzten Abflachungen **13,** den zwischen den Abflachungen **13** sich erstreckenden vier Klemmzonen **14** und den auf den Klemmzonen **14** rasterartig aufgebrachten Radialnuten **15,** wobei zwischen jeweils zwei Radialnuten **15** eine streifenförmige Querrippe **16** in der Höhe der Klemmzonen **14** verbleibt. Jede Querrippe **16** steigt von beiden benachbarten Abflachungen **13** zu einem mittig liegenden Gipfel **17** an. An den Gipfeln **17** weist der Zapfen **11** den grössten Durchmesser auf. Die vier Abflachungen **13** sind zu den vier Knotenkanten **19** des Knotenteils **10** orientiert, welche sich in Längsrichtung der Zapfen **11** erstrecken.

Das Rohrstück **2** ist von quadratischem Querschnitt und mit dem Querschnitt der Stirnseiten **18** des Knotenteils **10** kongruent, so dass sich das Rohrstück **2** im Prinzip fugen- und kantenlos mit seiner Schnittfläche **20** an das Knotenteil **10** ansetzen lässt. Am Rohrstück **2** werden die vier identischen Wandungen **21-24** und die längslaufenden Rohrkanten **25** definiert.

### Figuren 1C bis 2C

Mit dieser Figurenfolge wird das Herstellen einer Klemmverbindung als Vorgang gezeigt. An ein Verbindungselement **1 -** nun in Gestalt eines Winkelstücks mit drei Zapfen **11 -** sind bereits zwei Rohrstücke **2** angesetzt und befinden sich in der *Klemmstellung*. Ein weiteres Rohrstück **2** wird axial zum freien dritten Zapfen **11** positioniert, ist hierbei mit seiner Schnittfläche **20** der Stirnfläche **18** des Verbindungselements **1** zugewandt und die Rohrkanten **25** sind im Verhältnis zu den Knotenkanten **19** um 45° verdreht (s. Figur 1C). In dieser Positionierung lässt sich das Rohrstück **2** auf den freien Zapfen **11** aufschieben, bis die Schnittfläche **20** des Rohrstücks **2** an die Stirnseite **18** des Knotenteils **10** anstösst und befindet sich dann in der *Montagestellung*. (s. Figur 1D). Innerlich sind die Abflachungen **13** am Zapfen **11** den Wandungen **21-24** mit einem Montagespalt **S** mittig zugewandt, während die Klemmzonen **14** diagonal zu den Rohrkanten **25** weisen (s. Figur 2A).

Derart aufgesteckt wird das Rohrstück **2** schliesslich um 45° gedreht, so dass die Knotenkanten **19** mit den Rohrkanten **25** fluchten, womit die *Klemmstellung* erreicht ist (s. Figur 1E). Mit der relativen Verdrehung zwischen dem Verbindungselement **1** und dem Rohrstück **2** um 45° quetschen sich die Klemmzonen **14** jetzt mittig an den Wandungen **21-24** und die Abflachungen **13** zeigen diagonal zu den Rohrkanten **25.** Der Aussendurchmesser zwischen den Gipfeln **17** auf den Querrippen **16** ist grösser als der Innendurchmesser des Rohrstücks **2,** somit überragt jetzt der Zapfen **11** das Rohrstück **2** theoretisch innerlich (s. Figur 2B). Infolge dessen, dass sich der grössere Aussendurchmesser über die Klemmzonen **14** zwischen die engeren zueinander parallelen Wandungen **21**,**23**;**22**,**24** presst, werden die Wandungen **21**,**23**;**22**,**24** nach aussen konvex deformiert (s. Figur 2C). Hierdurch ergibt sich ein Reibschluss zwischen den Klemmzonen **14** und den inneren Wandungen **21-24.** Die Querrippen **16** mit den Gipfeln **17** verringern den Kraftaufwand für die Drehung in die *Klemmstellung* und ausserdem schneiden die Flanken der Querrippen **16** in die Wandungen **21-24,** so dass die Klemmverbindung einer höheren Auszugskraft widersteht.

### Figuren 3A bis 3G

Diese Figurenfolge soll verschiedene Konfigurationen des Verbindungselements **1** veranschaulichen, wobei alle Verbindungselemente **1** zentral ein Knotenteil **10** mit den Stirnseiten **18** und den Knotenkanten **19** sowie mehrere Zapfen **11** mit dem Profil **12** aufweisen. Das Winkelstück **1** mit zwei Zapfen **11** (s. Figur 1A), das Verlängerungsstück **1** mit zwei Zapfen **11** (s. Figur 3A), das T-Stück **1** mit drei Zapfen **11** (s. Figur 3B) und das Kreuzstück **1** mit vier Zapfen **11** (s. Figur 3D) spannen eine Ebene auf. Das Winkelstück **1** mit drei Zapfen **11** (s. Figur 3C) und das Winkelstück **1** mit vier Zapfen **11** (s. Figur 3E) spannen zwei Ebenen auf. Das Kreuzstück **1** mit fünf Zapfen **11** (s. Figur 3F) und das Kreuzstück **1** mit sechs Zapfen **11** (s. Figur 3G) spannen drei Ebenen auf.

Stellt man die Verbindungselemente **1** im Druckgussverfahren her, kann es für das Entnehmen aus der Gussform zur Begrenzung des Werkzeugaufwands sinnvoll sein, die sich in die zweite und dritte Ebene erstreckenden Zapfen **11'** mit einem vereinfachten Profil **12'** und vereinfachten Klemmzonen **14'** zu versehen. Man verzichtet auf die radial am Zapfen **11'** umlaufende Oberflächenstruktur. Diese Zapfen **11'** sind mit vier sich axial erstreckenden, jeweils um 90° versetzten Hohlkehlen **13'** ausgestattet, zwischen denen sich erhabene Längsrippen **16'** befinden, welche die Klemmzonen **14'** bilden, von den benachbarten Hohlkehlen **13'** aufsteigen und jeweils einen oberen Kamm **17'** aufweisen. Diese vereinfachten Zapfen **11'** stellen einen Kompromiss zwischen Aufwand und Funktion dar. Bei spanender Bearbeitung wird man alle Zapfen **11** mit dem vollständigen Profil **12** herstellen.

### Figuren 4A bis 4D

Zum Befestigen eines Fusses, einer Rolle oder eines Distanzstückes kann man im Knotenteil **10** auf einer Fläche, von der sich kein Zapfen **11,11'** erstreckt, eine Innengewindebohrung **100** vorsehen.

### Figur 5

Ein besonderer Gestaltungseffekt ergibt sich, wenn die Oberflächen des Knotenteils **10** in jeweils axialer Erstreckung, fluchtend zu den abgehenden Zapfen **11,11',** mit einem vom blossen Auge wahrnehmbaren Richtungsschliff **101** bearbeitet sind.

### Figuren 6A bis 6C

Zum Anordnen einer Tragstange **4** innerhalb eines Gestells ist ein in das Rohrstück **2** einhängbarer Halter **3** vorgesehen. Der Halter **3** besitzt eine Basisplatte **30,** nahe dessen oberer Kante auf der Rückseite eine nach oben ragende, zur Rückseite hin gebogene Einhängenase **31** entspringt. Nahe der unteren Kante der Basisplatte **30** entspringt auf der Rückseite eine Stütznase **32.** Beide Nasen **30,31** sind in ein im Rohrstück **2** vorhandenes Lochraster einhängbar. Auf der Vorderseite der Basisplatte **30** ist eine vertikal orientierte Stützplatte **33** rechtwinklig aufgesetzt. Diese Stützplatte **33** ist oben abgestuft, so dass zur Basisplatte **30** hin ein erhöhter Sims **34** und eine davon abgesenkte Stufe **35** entsteht. An der Tragstange **4** sind an den Enden vertikal übereinander liegende Einschnitte **40,41** vorgesehen, wobei der obere Einschnitt **40** eine geringere Tiefe als der untere Einschnitt **41** hat. Die Einschnitte **40,41** sind so bemessen, dass die Stützplatte **33** in den unteren Einschnitt **41** einfahren kann, während der Sims **34** im oberen Einschnitt **40** bündig zu liegen kommt und die Stufe **35** die Tragstange **4** innerlich untergreift.

### Figuren 7A und 7C

Zur Stabilisierung innerhalb eines aufgebauten Gestells gibt es eine Querverspannung **5,** die man vornehmlich einsetzen wird, wenn das Gestell freistehend aufgestellt ist. Eine Querverspannung **5** besteht aus zwei Spannern **50,** zwischen denen sich eine Spannstrebe **52** erstreckt. Jeder Spanner **50** weist eine Einhängenase **51** auf, die in ein Loch des im Rohrstück **2** vorgesehenen Lochrasters **26** einhängbar ist. Eine besondere Stabilisierung erreicht man mit der Anordnung von zwei sich kreuzenden Querverspannungen **5.**

### Figur 8

Der Montageschlüssel **6** dient zum Ansetzen an den Rohrstücken **2** und den Knotenteilen **10** der Verbindungselemente **1,** um Klemmverbindungen herzustellen bzw. zu lösen. Beim Verdrehen in die *Klemmstellung* ermöglicht der Montageschlüssel **6** auch die exakte Ausrichtung zwischen den Knotenkanten **19** und den Rohrkanten **25.** In seiner einfachsten, prinzipiellen Gestalt hat der Montageschlüssel **6** einen Stielgriff **60** und eine U-förmige Schlüsselöffnung **61** in der Dimension des Rohrstücks **2** und des Knotenteils **10.**

### Figur 9A

Das mittels verschieden konfigurierter Verbindungselemente **1** und Rohrstücken **2** unterschiedlicher Länge aufgebaute Gestell **7** besitzt zwei Zellen **70,71.** In die rechte Gestellzelle **71** sind Tablare **8** eingesetzt. Die Abstützung der Tablare **8** könnte z.B. auf nicht dargestellten Rastteilen erfolgen, welche in das Lochraster **26** der vertikal angeordneten Rohrstücke **2** eingesteckt sind. Kreuzweise angebrachte Querverspannungen **5** bewirken die zusätzliche Stabilisierung des gesamten Gestells **7.** In die linke Gestellzelle **70** ist eine Tragstange **4** eingesetzt, welche Querträger **42** aufweist. Das ganze Gestell **7** ruht auf Füssen und ist zur Aufstellung am Boden konzipiert.

### Figur 9B

Auch dieses Gestell **7** mit nur einer Gestellzelle 70 ist zur Aufstellung am Boden vorgesehen. Seitliche Querverspannungen **5** sowie eine diagonal durch die Gestellzelle **70** verlaufende Querverspannung **5** sorgen für ausreichende Sicherheit in der Stabilität. Auf mit Haltern **3** eingesetzten Tragstangen **4,** die mit Querträgern **42** ergänzt sind, liegen Tablare **8** auf, welche hier als Gestaltungsbeispiel nur etwa halb in die Gestellzelle **70** hineinragen, während die vorderen Hälften der Tablare **8** aus der Gestellzelle **70** herausragen. Eine Tragstange **4** an der Hinterseite des Gestells **7** könnte zum direkten Anhängen von Artikeln, wie Waren oder einer Dekoration, dienen.

### Figur 9C

Das hier gezeigte Gestell **7** mit seiner einen Gestellzelle **70** ist an eine Wandschiene **9** angehängt. Es besitzt wiederum Querverspannungen **5,** ein eingesetztes Tablar **8** sowie eine im Boden des Gestells **7** angeordnete Tragstange **4.**

Ausdrücklich erwähnt seien noch folgende Abwandlungsmöglichkeiten der bisher beschriebenen Klemmverbindung:
- Im Prinzip wären am Zapfen **11,11'** zwei gegenüber liegende Klemmzonen **14,14'** ausreichend.
- Das Rohrstück **2** könnte anstelle des quadratischen Querschnitts auch oval, drei- fünf- oder sechskantig sein, wobei quadratisches Material am geeignetsten sein dürfte.
- Die Palette der Verbindungselemente **1** liesse sich noch mit verschiedenen Abwinkelungen von z.B. 30°, 45° und 60° erweitern.

## Patentansprüche

1. Lösbare Klemmverbindung für eine Verstrebung aus Rohr , die Klemmverbindung umfaßt Verbindungselemente (**1**) und Rohrstücke (**2**), wobei:
a) ein Verbindungselement (**1**) ein zentrisch angeordnetes Knotenteil (**10**) aufweist, von dessen Stirnseiten (**18**) sich zumindest ein Zapfen (**11**) erstreckt;
b) am Zapfen (**11**) zwei, vorzugsweise vier axial verlaufende und zueinander systematisch versetzte Abflachungen (**13**) vorhanden sind, zwischen denen sich zwei, vorzugsweise vier axial verlaufende und zueinander systematisch versetzte Klemmzonen (**14**) befinden;
c) das Rohrstück (**2**) vorzugsweise im Querschnitt quadratisch ist und vier Wandungen (**21-24**) sowie vier längslaufende Rohrkanten (**25**) aufweist und beidseits mit einer Schnittfläche (**20**) endet;
d) in der *Montagestellung* als relative Drehstellung zwischen Zapfen (**11**) und Rohrstück (**2**) sich der Zapfen (**11**) mit den über die Abflachungen (**13**) verschmälerten Durchmessern des Zapfens (**11**) in das Rohrstück (**2**) einschieben lässt, wobei die Abflachungen (**13**) zur jeweils benachbarten Wandung (**21-24**) einen Montagespalt (**S**) einnehmen, während die über die Klemmzonen (**14**) unverminderten Durchmesser des Zapfens (**11**) diagonal im Querschnitt des Rohrstücks (**2**) zu liegen kommen;
e) in der um 45° gedrehten *Klemmstellung* die Klemmzonen (**14**) mit der jeweils benachbarten Wandung (**21-24**) in Reibschluss geraten und hierbei die Wandungen (**21-24**) konvex nach aussen elastisch verformen, während die Abflachungen (**13**) diagonal im Querschnitt des Rohrstücks (**2**) zu liegen kommen, **dadurch gekennzeichnet, dass**
f) die Klemmzonen (**14**) von Querrippen (**16**) gebildet werden, die zwischen den Zapfen (**11**) umlaufenden Radialnuten (**15**) liegen, einen oberen Gipfel (**17**) aufweisen und nach beiden Seiten zu den benachbarten Abflachungen (**13**) hin abfallen; und
g) beim Drehen in die *Klemmstellung* die Querrippen (**16**) sukzessive an der jeweils benachbarten Wandung (**21-24**) bis zu den Gipfeln (**17**) auflaufen.

2. Klemmverbindung nach Anspruch 1, **dadurch gekennzeichnet, dass**
a) die Stirnseiten (**18**) des Knotenteils (**10**) den gleichen Querschnitt aufweisen wie das auf den Zapfen (**11**) aufzuschiebende Rohrstück (**2**);
b) die Schnittfläche (**20**) des Rohrstücks (**2**) im Prinzip fugenlos bis an die Stirnseite (**18**) aufschiebbar ist; und
c) in der *Klemmstellung* die Rohrkanten (**25**) mit den Knotenkanten (**19**) fluchten.

3. Klemmverbindung nach Anspruch 1 oder 2, **dadurch gekennzeichnet, dass** am Knotenteil (**10**) eine Innengewindebohrung (**100**) zur Befestigung eines Fuss- oder Abstützelements vorgesehen ist.

4. Klemmverbindung nach einem der Ansprüche 1 bis 3, **dadurch gekennzeichnet, dass** an einem dritten oder weiteren Zapfen (**11**'), der sich von einem Verbindungselement (**1**) in Relation zu den übrigen Zapfen (**11**) in eine andere Ebene erstreckt, die Klemmzonen (**14'**) nur aus zwischen den Abflachungen (**13'**) liegenden Längsrippen (**16'**) bestehen, welche zuoberst einen Kamm (**17'**) aufweisen.

5. Klemmverbindung nach einem der Ansprüche 1 bis 4, **dadurch gekennzeichnet, dass** die Oberflächen des Knotenteils (**10**) in jeweils axialer Erstreckung, fluchtend zu den abgehenden Zapfen (**11,11'**), mit einem vom blossen Auge wahrnehmbaren Richtungsschliff (**101**) bearbeitet sind.

6. Klemmverbindung nach einem der Ansprüche 1 bis 5, **dadurch gekennzeichnet, dass** vom Knotenteil (**10**) bis zu sechs Zapfen (**11,11'**) abgehen.

7. Klemmverbindung nach einem der Ansprüche 1 bis 6, **dadurch gekennzeichnet, dass** mit zumindest einem Verbindungselement (**1**) mit zumindest zwei Zapfen (**11,11'**) und zumindest zwei Rohrstücken (**2**) eine Stangenkonstruktion oder ein Rahmen errichtet ist.

8. Klemmverbindung nach einem der Ansprüche 1 bis 6, **dadurch gekennzeichnet, dass**
a) mit einer Vielzahl von Verbindungselementen (**1**) und Rohrstücken (**2**) ein Gestell (**7**) errichtet ist;
b) das Gestell (**7**) zum Aufstellen auf dem Boden oder Anhängen konzipiert ist;
c) zumindest ausgewählte Rohrstücke (**2**) ein Lochraster (**26**) aufweisen, in das Halter (**3**) für Tragstangen (**4**) oder Tablare (**8**) oder in das die Spanner (**50**) von Querverspannungen (**5**) einhängbar sind, die sich zu anderen Rohrstücken (**2**) innerhalb des Gestells (**7**) erstrecken.

9. Klemmverbindung nach einem der Ansprüche 1 bis 8, **dadurch gekennzeichnet, dass** die Klemmverbindung dient:
a) innerhalb eines errichteten Gestells (**7**) dem Aufbau eines Möbels oder eines Gebildes zur Warenpräsentation; oder
b) als Ausstattungssystem zur Raumgestaltung, z.B. für die Errichtung von Abschirmwänden oder Dekorationsflächen; oder
c) als Halterung für Artikel des beruflichen oder privaten Gebrauchs.

## Claims

1. A releasable clamping connection for a strut arrangement made of tubing, the clamping connection comprises connecting elements (**1**) and tubing portions (**2**), wherein:
a) a connecting element (**1**) has a centrally arranged junction part (**10**), from the end sides (**18**) of which at least one stub (**11**) extends;
b) provided on the stub (**11**) are two, preferably four, axially running flattened portions (**13**) which are offset systematically in relation to one another and between which there are located two, preferably four, axially running clamping zones (**14**) which are offset systematically in relation to one another;
c) the tubing portion (**2**) is preferably of square cross section and has four walls (**21-24**) and four longitudinally running tubing edges (**25**) and terminates on both sides with a cut surface (**20**);
d) in the *installation position,* as a rotational position of the stub (**11**) and tubing portion (**2**) relative to one another, the stub (**11**) can be pushed into the tubing portion (**2**) by way of the diameters of the stub (**11**) which have been narrowed, by way of the flattened portions (**13**), the flattened portions (**13**) assume an installation gap (**S**) in relation to the respectively adjacent wall (**21-24**), while the diameters of the stub (**11**) which have not been reduced, by way of the clamping zones (**14**), come to rest diagonally in the cross section of the tubing portion (**2**);
e) in the *clamped position,* rotated 45°, the clamping zones (**14**) pass into frictional locking with respectively adjacent wall (**21-24**) and thus elastically deform the walls (**21-24**) convexly in the outward direction, while the flat-tened portions (**13**) come to rest diagonally in the cross section of the tubing portion (**2**), **characterised in that**
f) the clamping zones (**14**) are formed by transverse ribs (**16**) which are located between radial grooves (**15**), encircling the stub (**11**), have a top peak (**17**) and slope downward on both sides to the adjacent flattened portions (**13**); and
g) upon rotation into the *clamped position,* the transverse ribs (**16**) run gradually onto the respectively adjacent wall (**21-24**) as far as the peaks (**17**).

2. The clamping connection claimed in claim 1, **characterised in that**
a) the end sides (**18**) of the junction part (**10**) have the same cross section as the tubing portion (**2**) which is to be pushed onto the stub (**11**);
b) the cut surface (**20**) of the tubing portion (**2**) may be pushed up to the end side (**18**), in principle, in a joint-free manner; and
c) in the *clamped position,* the tubing edges (**25**) are in alignment with the junction edges (**19**).

3. The clamping connection as claimed in claim 1 or 2, **characterised in that** an internally threaded bore (**100**) for the purpose of fastening a foot or supporting element is provided on the junction part (**10**).

4. The clamping connection as claimed in one of claims 1 to 3, **characterised in that** on a third or further stub (**11'**), which extends from a connecting element (**1**) into a different plane in relation to the rest of the stubs (**11**), the clamping zones (**14'**) merely comprise longitudinal ribs (**16'**) which are located between the flattened portions (**13'**) and have a ridge (**17'**) at the very top.

5. The clamping connection as claimed in one of claims 1 to 4, **characterised in that** in the axial extent in each case, in alignment with the outgoing stubs (**11,11'**), the surfaces of the junction part (**10**) have been machined to give a directional ground finish (**101**) which can be seen with the naked eye.

6. The clamping connection as claimed in one of claims 1 to 5, **characterised in that** up to six stubs (**11,11'**) extend from the junction part (**10**).

7. The clamping connection as claimed in one of claims 1 to 6, **characterised in that** a bar structure or a frame is erected by way of at least one connecting element (**1**) with at least two stubs (**11,11'**) and at least two tubing portions (**2**).

8. The clamping connection as claimed in one of claims 1 to 6,
**characterised in that**
a) a framework (**7**) is erected by way of a multiplicity of connecting elements (**1**) and tubing portions (**2**);
b) the framework (**7**) is designed for setting up on the-ground or for hanging purposes;
c) at least selected tubing portions (**2**) have a pattern of holes (**26**) into which it is possible to fit the retaining means (**3**) for supporting bars (**4**) or shelves (**8**) or into which it is possible to fit the tensioners (**50**) of transverse bracing means (**5**) which extend to other tubing portions (**2**) within the framework (**7**).

9. The clamping connection as claimed in one of claims 1 to 8, **characterised in that** the clamping connection serves:
a) within an erected framework (**7**), for setting up a piece of furniture or a structure for displaying goods; or
b) as a system for fitting out rooms, e.g. for erecting screen walls or decorative surfaces; or
c) as a mount for articles for professional or private use.

## Revendications

1. Assemblage serré détachable pour une contre-fiche tubulaire; l'assemblage serré comprend des éléments d'assemblage (**1**) et des segments de tube (**2**), tandis que:
a) un élément d'assemblage (**1**) présente une pièce nodale (**10**) disposée au centre avec faces frontales (**18**) d'où ressort au moins un tenon (**11**);
b) le tenon (**11**) comporte deux, de préférence quatre méplats (**13**) longeant l'axe et systématiquement décalés les uns par rapport aux autres, entre lesquels se trouvent deux, de préférence, quatre zones de serrage (**14**) au parcours axial et systématiquement décalées les unes par rapport aux autres;
c) le segment de tube (**2**) est de préférence de section carrée, présentant quatre parois (**21-24**), ainsi que quatre arêtes longitudinales (**25**) de tube et se terminant aux deux bouts par une surface de coupe (**20**);
d) En *position de montage,* comme position de rotation relative entre le tenon (**11**) et le segment de tube (**2**), le tenon (**11**) se laisse insérer dans le segment de tube (**2**) par le diamètre du tenon (**11**) réduit au niveau des méplats (**13**); ce faisant, les méplats (**13**) forment un interstice de montage (**S**) contre chaque paroi adjacente (**21-24**) tandis que le diamètre non réduit du tenon (**11**) au niveau des zones de serrage (**14**) va se loger diagonalement dans la section du segment de tube (**2**);
e) en *position de serrage tournée* de 45°, les zones de serrage (**14**) se pressent par friction contre les parois adjacentes respectives (**21-24**); ce faisant, les parois (**21-24**) se déforment de manière élastique en convexe vers l'extérieur, tandis que les méplats (**13**) vont se loger diagonalement dans la section du segment de tube (**2**), **caractérisé par** ce que
f) les zones de serrage (**14**) formées par les cannelures transversales (**16**) se situent entre les rainures radiales (**15**) au pourtour du tenon (**11**) et présentent un sommet supérieur (**17**), puis redescendent des deux côtés jusqu'aux méplats (**13**) adjacents; et
g) en tournant en *position de serrage,* les cannelures transversales (**16**) remontent graduellement contre les parois adjacentes respectives (**21-24**) jusqu'au sommet (**17**).

2. Assemblage serré selon revendication 1, **caractérisé par** ce que
a) les faces frontales (**18**) de la pièce nodale (**10**) ont la même section que le segment de tube (**2**) à emboîter par dessus le tenon (**11**);
b) la surface de coupe (**20**) du segment de tube (**2**) se laisse insérer en principe sans joint contre la face frontale (**18**); et
c) en *position de serrage,* les arêtes (**25**) du tube sont alignées avec les arêtes (**19**) de la pièce nodale.

3. Assemblage serré selon revendication 1 ou 2, **caractérisé par** ce qu'un alésage taraudé (**100**) est prévu dans la pièce nodale (**10**) pour y fixer un pied ou un élément d'appui.

4. Assemblage serré selon l'une des revendications 1 à 3, **caractérisé par** ce que sur un troisième ou quatrième tenon (**11'**) partant d'un élément d'assemblage (**1**) et s'étendant, par rapport aux autres tenons (**11**), dans un plan différent, les zones de serrage (**14'**) consistent uniquement en des cannelures longitudinales (**16'**) situées entre les méplats (**13'**), lesdites cannelures ayant une crête (**17'**).

5. Assemblage serré selon l'une des revendications 1 à 4, **caractérisé par** ce que les surfaces de la pièce nodale (**10**) dans chaque prolongement axial sont conçues dans l'alignement des tenons qui s'avancent (**11,11'**), avec un poli directif (**101**) visible à l'oeil nu.

6. Assemblage serré selon l'une des revendications 1 à 5, **caractérisé par** ce que la pièce nodale (**10**) peut comporter jusqu'à six tenons (**11,11'**).

7. Assemblage serré selon l'une des revendications 1 à 6, **caractérisé par** ce qu'il faut au moins un élément d'assemblage (**1**) avec au moins deux tenons (**11,11'**) et au moins deux segments de tube (**2**) pour réaliser une ossature de tiges ou un châssis.

8. Assemblage serré selon l'une des revendications 1 à 6, **caractérisé par** ce que
a) un certain nombre d'éléments d'assemblage (**1**) et de segments de tube (**2**) permettent de monter un bâti (**7**);
b) le bâti (**7**) est destiné à être posé sur le sol ou suspendu au mur;
c) au moins des segments de tube (**2**) sélectionnés présentent une grille de trous (**26**) dans lesquels peuvent s'accrocher des supports (**3**) pour tiges porteuses (**4**) ou des étagères (**8**) ou dans lesquels s'attachent les tendeurs (**50**) des croisillons (**5**) qui s'étendent à d'autres segments de tube (**2**) dans le bâti (**7**).

9. Assemblage serré selon l'une des revendications 1 à 8, **caractérisé par** ce que l'assemblage serré sert:
a) dans le cadre de la réalisation d'un bâti (**7**), à monter un meuble ou un présentoir d'exposition des marchandises; ou
b) de système d'aménagement dans l'agencement d'une pièce, par exemple, pour effectuer des parois de protection ou surfaces décoratives; ou
c) de support d'articles d'usage professionnel ou privé.
